# EUROPEAN PATENT APPLICATION

(11) **EP 1 357 420 A1**
(43) Date of publication of application: **29.10.2003**
(21) Application number: 01995040.1
(22) Date of filing: 28.12.2001
(51) Int. Cl.: G02F 1/1333, G02F 1/33

(54) **TOUCH PANEL-INTEGRATED REFLECTION TYPE LCD DEVICE AND ELECTRONIC DEVICE**

(30) Priority: 28.12.2000 JP 2000402480
(71) Applicant: Nokia Corporation, 02150 Espoo (FI)
(72) Inventor: CHOSA, Yoshitaka c/o Nokia Japan Co., Ltd., Meguro-ku, Tokyo 153-0064 (JP)
(74) Representative: Slingsby, Philip Roy
(86) International application number: JP0111647
(87) International publication number: WO02054144

(57) **Abstract**

A touch panel integrated type reflective LCD unit has a touch panel body A having a light transmitting property and an electrode, a front light guide body C having irregularities x for light reflection on its surface, and a reflective LCD body D, and is integrally constructed by sequentially laminating the touch panel body A, the front light guide body C and the reflective LCD body D into a multi-layer structure. In the touch panel integrated type reflective LCD unit, a coating layer B for covering the irregularities x for light reflection of the front light guide body C is sandwiched between the touch panel body A and the front light guide body C.

## Description

### BACKGROUND OF THE INVENTION

### Field of the Invention

The present invention relates to a reflective LCD unit (liquid crystal display unit) employed as a display, etc. of various kinds of electronic devices such as a mobile communication terminal device, an information technology device, a portable personal computer, and to an electronic apparatus having the unit.

### Description of the Prior Art

A reflective LCD unit of a front light guide plate structure with a touch panel is often employed in a recent electronic apparatus. Fig. 2 is an exploded perspective view showing the construction of a conventional touch panel integrated type reflective LCD unit. This unit mainly comprises a touch panel 21, a spacer 22, a top film sheet 23, a bottom plate 24 (made of glass or plastic), an ITO circuit 25 (located between a top (upper face side) film sheet 23 and a bottom (bottom face side) plate 24), a reflector 26, a prism rod 27, an LED 28, a light guide plate 29 and a reflective LCD 30.

However, in such a structure of the conventional touch panel integrated type reflective LCD unit, the light guide plate 29 and the touch panel 21 are assembled in a manner that they are spaced and separated from each other. The light guide plate 29 and the touch panel 21 constituting a basic module structure are separately manufactured, but are formed as a single cabinet so that the unit is increased in thickness and weight in the structure of the conventional touch panel integrated type reflective LCD unit. Therefore, a problem is that a trouble occurs in a design to reduce the thickness and weight and this problem has not been solved yet even now.

In a product having the conventional touch panel integrated type reflective LCD unit, a space (air layer) is provided between the light guide plate 29 and the touch panel 21, and plays a role to protect concave and convex grooves on a light guide plate surface from damage when characters, etc. are written on the touch panel 21 or a pressure is applied to that. However, as the whole thickness of the unit is increased due to this space (air layer). this structure is not preferable.

The present invention was made in view of the above problems of the conventional unit. An object of the present invention is to provide a novel touch panel integrated type reflective LCD unit having performance of high quality in view of reductions in thickness and weight, an reflectivity improvement, a reduction in manufacturing costs, etc. in structure by improving on the LCD panel structure having an additional space as in the conventional unit, and also provide an electronic apparatus provided with this touch panel integrated type reflective LCD unit.

### SUMMARY OF THE INVENTION

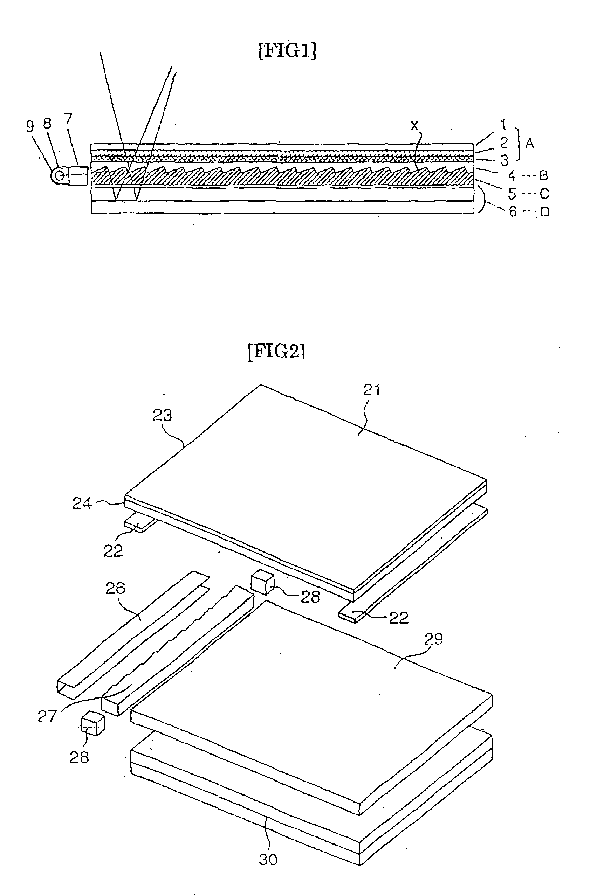

To solve the above problems, the touch panel integrated type reflective LCD unit and the electronic apparatus in the present invention use the following means. Designated reference numerals conform to those of Fig. 1 showing the reflective LCD unit according to the present invention.
(1) A touch panel integrated type reflective LCD unit has a touch panel body A having a light transmitting property and an electrode, a front light guide body C having irregularities x for light reflection on its surface, and a reflective LCD body D, and is integrally constructed by sequentially forming the touch panel body A, the front light guide body C and the reflective LCD body D as a multi-layer structure. In the touch panel integrated type reflective LCD unit, a coating layer B for covering the irregularities x for light reflection in the front light guide body C is arranged, laminated and formed between the touch panel body A and the front light guide body C.
(2) In this touch panel integrated type reflective LCD unit, the coating layer B is laminated and formed without forming a space with respect to the touch panel body A.
(3) In these touch panel integrated type reflective LCD units, a material constituting the coating layer B is formed as a material having a refractive index different from that of the front light guide body C.
(4) In these touch panel integrated type reflective LCD units, the coating layer B is formed as an ultraviolet coating layer (ultraviolet protective layer).
(5) An electronic apparatus having a screen display unit is set such that this screen display unit is constructed by employing a touch panel integrated type reflective LCD unit according to any one of claims 1 to 4.

### BRIEF DESCRIPTION OF THE DRAWINGS

Fig. 1 is a cross-sectional view of a touch panel integrated type reflective LCD unit according to the present invention.
Fig. 2 is an exploded perspective view of a conventional touch panel integrated type reflective LCD unit.

### DETAILED DESCRIPTION OF THE PREFERRED EMBODIMENT

The embodiment modes of a touch panel integrated type reflective LCD unit and an electronic apparatus according to the present invention will now be explained in detail with reference to the accompanying drawings.

Fig. 1 is a cross-sectional view of a touch panel integrated type reflective LCD unit according to the present invention. Main constructional elements in the touch panel integrated type reflective LCD unit according to the present invention are shown with reference to this figure. Here, a touch panel body A is first constructed by sequentially laminating a light transmitting film 1, a top layer electrode 2 and a bottom layer electrode 3 as multi-layers.

Here, a coating layer B (4) is preferably formed by laminating and constructing the touch panel body A and a front light guide body C without forming a space. Further, a material constructing this coating layer B is preferably formed such that this material has a refractive index different from that of the front light guide body C. Further, it is effective to form this coating layer B as a UV (Ultraviolet) coating layer of ultraviolet protection.

The front light guide body C (5) has many concave and convex grooves x for light reflection on its surface. This surface is UV-coated so as to cover the entire surface with the coating layer B in a layer, and can protect the many concave and convex grooves x for reflection on the surface.

The touch panel integrated type reflective LCD unit of the present invention preferably has a structure in which light 8 (light source) is reflected by a reflector 9, and is also reflected by the front light guide body C (5) via a prism rod 7, and is further reflected by a reflective LCD body D, and passes through the touch panel body A and is emitted to the outside.

### INDUSTRIAL APPLICABILITY

Thus, in accordance with the present invention, the following excellent effects are achieved. Namely, in the touch panel integrated type reflective LCD unit in the present invention, the coating layer is formed by reducing a structural useless space in the conventional unit. Thus, many merits such as reduction in thickness and weight, a reflectivity improvement. a reduction in manufacturing costs, etc. in the unit structure are obtained, and the unit can be very easily applied to various kinds of electronic apparatuses. Further, since there is no useless clearance (space) in the structure as the touch panel integrated type reflective LCD unit by adopting the coating layer in the present invention, a rigid integrated structure can be formed, and high-degree uniformity of brightness and luminance and excellent light transmitting property can be also realized.

## Claims

1. A touch panel integrated type reflective LCD unit comprising:
a touch panel body having a light transmitting property and an electrode,
a front light guide body having irregularities for light reflection on its surface, and
a reflective LCD body,
wherein the touch panel body; the front light guide body. and the reflective LCD body are laminated in sequence into a integrated structure,
wherein a coating layer for covering the irregularities for light reflection of the front light guide body is sandwiched between said touch panel body and said front light guide body.

2. A touch panel integrated type reflective LCD unit according to claim 1, wherein said coating layer is formed to be laminated without forming a space with respect to said touch panel body.

3. A touch panel integrated type reflective LCD unit according to claim 1 or 2, wherein a material constituting said coating layer is formed as a material having a refractive index different from that of said front light guide body.

4. A touch panel integrated type reflective LCD unit according to any one of claims 1 to 3, wherein said coating layer is formed as an ultraviolet protective layer

5. An electronic apparatus having a screen display unit, said screen display unit is constructed by applying a touch panel integrated type reflective LCD unit according to any one of claims 1 to 4.
